# EUROPÄISCHE PATENTSCHRIFT

(11) **EP 0 596 293 B1**
(45) Veröffentlichungstag und Bekanntmachung des Hinweises auf die Patenterteilung: **14.01.1998**
(21) Anmeldenummer: 93116612.8
(22) Anmeldetag: 14.10.1993
(51) Int. Cl.: G01L 1/22, G01B 7/16

(54) **Dehnungsmessstreifen und Messgrössenaufnehmer mit einem solchen Dehnungsmessstreifen**
Strain gauge and transducer using same
Jauge d'allongement et transducteur comportant une telle jauge

(30) Priorität: 04.11.1992 DE 4236985
(43) Veröffentlichungstag der Anmeldung: 11.05.1994
(73) Patentinhaber: HOTTINGER BALDWIN MESSTECHNIK GMBH, D-64293 Darmstadt (DE)
(72) Erfinder: Ruppin, Hagen, D-64569 Nauheim (DE); Mohr, Stephan, D-64401 Gross-Bieberau (DE); Breitwieser, Werner, D-64380 Rossdorf (DE)
(74) Vertreter: Brandt, Ernst-Ulrich, Dipl.-Phys., Dipl.-Ing.

(56) Entgegenhaltungen:
- EP-A- 0 229 553
- EP-A- 0 321 225
- EP-A- 0 451 636
- EP-A- 0 469 323
- WO-A-90/06957

## Beschreibung

Die Erfindung betrifft einen Dehnungsmeßstreifen mit einer Trägerschicht, auf welcher ein Meßgitter angeordnet ist, und einen Meßgrößenaufnehmer mit einem solchen Dehnungsmeßstreifen. Dehnungsmeßstreifen dieser Gattung sind aus der GB 728606 bekannt. Danach wird aus einer sehr dünnen, gewalzten Metallfolie auf fotolithographischem Wege ein mäanderförmiges Meßgitter mit an den Enden ausgebildeten Kontaktbereichen durch Ätzen hergestellt. Danach wird eine isolierende Epoxidharz-Trägerschicht auf diese Metallfolie aufgebracht. Derartige Dehnungsmeßstreifen mit einer Epoxidharz-Trägerschicht, die sehr spröde ist, sind beim Herstellen, Handhaben und Applizieren mit höchster Vorsicht und Sorgfalt zu behandeln, um ein Zerbrechen zu vermeiden. Dies gilt natürlich auch für Meßgrößenaufnehmer mit solchen Dehnungsmeßstreifen. In die Spannungsanalyse haben solche Dehnungsmeßstreifen sowie Dehnungsmeßstreifen mit Phenolharz-Trägerschicht, für die die selbe Problematik gilt, auch keinen Eingang gefunden.

Es wurden auch schon Vorschläge gemacht, Trägerschichten aus Phenol- bzw. Epoxidharz durch Glasfaservlies zu verstärken, jedoch sind die Dehnungsmeßstreifen auf einer solchen Trägerschicht sehr spröde und brechen leicht beim Schneiden und während der Handhabung. Darüber hinaus entsteht während der Herstellung solcher Dehnungsmeßstreifen aufgrund der unvermeidbaren Fehler im Glasfaservlies ein hoher Ausschuß.

Es sind auch Dehnungsmeßstreifen mit Polyimid- oder Polyamidimid als Trägerfolie bekannt, die sehr robuste Eigenschaften haben und auch in der Spannungsanalyse verwendet werden, jedoch sind sie für Präzisionsaufnehmer aufgrund ihres starken Kriechens nicht verwendbar.

Ein weiterer Nachteil der oben genannten Dehnungsmeßstreifenarten ist, daß die Träger bzw. Abdeckschicht in Abhängigkeit von der Umgebungsfeuchtigkeit quillt bzw. schrumpft, was unmittelbar zu Widerstandsänderungen des Dehnungsmeßstreifen und damit zu einem feuchteabhängigen Nullsignal führt. Ein weiterer nachteiliger Effekt der bekannten Dehnungsmeßstreifen ist, daß das Kriechverhalten temperaturabhängig ist, was mit vertretbaren Kompensationsmaßnahmen nicht zu beherrschen ist und somit den Einsatz nur für bestimmte Temperaturbereiche zuläßt.

Durch die DE-PS 40 11 314 ist ein Dehnungsmeßstreifen bekanntgeworden, dessen Trägerschicht durch eine Polyphenylensulfid-Folie gebildet wird. Hierdurch wurde ein Dehnungsmeßstreifen geschaffen, der robuste mechanische Eigenschaften mit optimalem Kriechverhalten und geringer Quellneigung und Wasserdurchlässigkeit vereinigt, so daß sich auf relativ kostengünstige Weise Meßgrößenaufnehmer herstellen lassen, die nahezu frei sind von Hysteresefehlern und Fehlern, die durch Umgebungseinflüsse bedingt sind. Durch diese, einen Entwicklungssprung darstellenden Dehnungsmeßstreifen lassen sich zwar hochpräzise Meßgrößenaufnehmer fertigen, jedoch hat es sich gezeigt, daß die Verklebbarkeit der Polyphenylensufid-Folie mit dem Meßgitter bzw. mit einer weiteren Polyphenylensulfid-Folie nicht ganz unproblematisch ist. So ist die Abschälfestigkeit einer solchen Klebeverbindung in manchen Anwendungsfällen nicht ganz befriedigend, so daß für solche Einsatzzwecke aufwendige Vorbehandlungen angewandt werden müssen, welche die Herstellungskosten natürlich erhöhen. Auch ist die thermische Belastbarkeit der Dehnungsmeßstreifen auf Polyphenylensulfid-Trägerschicht für extreme Einsätze oft nicht ausreichend.

Der Erfindung liegt daher die Aufgabe zugrunde, einen gattungs gemäßen Dehnungsmeßstreifen und einen Meßgrößenaufnehmer mit einem derartigen Dehnungsmeßstreifen zu schaffen, der sich durch eine hohe Linearität und ein optimales Kriechverhalten auszeichnet, dabei aber besonders kostengünstig herstellbar, thermisch hoch belastbar und zusätzlich bei geringem Raumbedarf (Dicke des Dehnungsmeßstreifens) besonders unempfindlich gegen Feuchtigkeit und Wasser bzw. andere Flüssigkeiten ist. Auch soll die Festigkeit der Klebeverbindung allerhöchsten Ansprüchen gerecht werden.

Diese Aufgabe wird erfindungsgemäß dadurch gelöst, daß die Trägerschicht eine Polyaryletherketon-Folie ist. Diese Folie besitzt eine ähnlich gute Wasserundurchlässigkeit wie die Polyphenylensulfid-Folie; sie läßt sich ohne besonders aufwendige Verfahren hochfest verkleben und ist thermisch extrem belastbar.

Zwar sind aus dem Handbuch "Neue Konstruktionsmöglichkeiten mit Kunststoffen", Fein, Kunz, WEKA-Verlag, Teil 7, Kap. 2.20, Seite 1 bis 16, verschiedene Materialeigenschaften und Einsatzmöglichkeiten für diese Familie teilkristalliner Thermoplaste bekanntgeworden, jedoch war die Kombination von so günstigen Eigenschaften bei einer Verwendung dieses Materials als Trägerschicht für Dehnungsmeßstreifen nicht zu erwarten. Insbesondere findet sich in den Datenblättern für dieses Material kein Hinweis auf die besonders für den Meßgrößenaufnehmerbau wichtige Eigenschaft des Kriechens oder auf die besonders hoch belastbare Verklebbarkeit dieses Materials.

Durch die extrem niedrige Wasseraufnahme der Polyaryletherketon-Folie lassen sich gekapselte Dehnungsmeßstreifen herstellen, die sich in ihrer Dicke kaum von ungekapselten Dehnungsmeßstreifen unterscheiden. Daher ist bei einer bevorzugten Ausführungsform der Erfindung vorgesehen, daß das Meßgitter durch eine aus Polyaryletherketon-Folie bestehende Abdeckschicht abgedeckt ist. Dadurch, daß diese Folie unter Einfluß von Feuchtigkeit kaum quillt, ist eine beidseitige Abdeckung bzw. Kapselung des Meßgitters möglich. Das Meßgitter kann dabei direkt mit der Folie verklebt werden; es ist jedoch auch möglich, Foliendehnungsmeßstreifen der herkömmlichen Art zu kapseln. Es ist dabei besonders günstig, wenn der Verbund zwischen Trägerschicht und Meßgitter zwischen Meßgrößenaufnehmer, Trägerschicht und Meßgitter bzw. zwischen Meßgitterträgerschicht und Abdeckschicht durch Verkleben hergestellt ist.

Durch die überraschend gute Verklebbarkeit des Polyaryletherketons kann auf eine besonders aufwendige Vorbehandlung vor dem Verkleben verzichtet werden, so daß es zum Erreichen einer hochfesten Klebeverbindung meist schon ausrecht, daß die Trägerschicht und/oder die Abdeckschicht vor dem Verkleben mittels einer kostengünstig durchführbare Corona-Behandlung aktiviert wird. Alternativ hierzu ist auch eine Vorbehandlung mittels Niederdruckplasma zu diesem Zwecke ausreichend.

Eine weitere Verbesserung der Festigkeit der Klebeverbindung läßt sich erzielen, wenn die Träger- und/oder Abdeckschicht vor dem Verkleben mechanisch aufgerauht wird. Die Festigkeit der Klebeverbindung läßt sich auch dadurch steigern, daß das Meßgitter vor dem Verkleben im Niederdruckplasma behandelt wird.

Zum Verkleben eignet sich besonders gut ein Epoxidharz-Kleber. Besonders wasserdichte Dehnungsmeßstreifen mit Träger- und Abdeckschicht lassen sich dadurch realisieren, daß in dem Bereich, in welchem Anschlußkabel des Meßgitters aus der Kapselung herausgeführt sind, ein Transferklebefilm aus einem gegebenenfalls modifizierten Acrylharz zwischen der Träger- und der Abdeckschicht vorgesehen ist, die die Anschlußkabel einbetten.

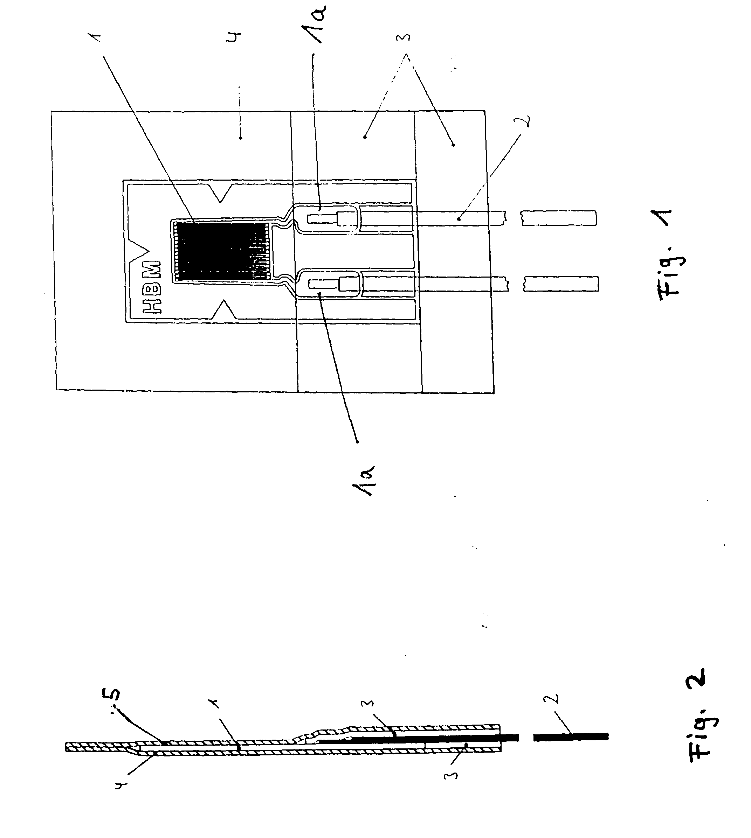

Weitere vorteilhafte Merkmale sowie der Aufbau eines erfindungsgemäßen Dehnungsmeßstreifens ergeben sich aus der nachstehenden Beschreibung eines Ausführungsbeispiels anhand der Zeichnung. Hierzu zeigt Figur 1 die Draufsicht auf einen noch nicht abgedeckten Dehnungsmeßstreifen und Figur 2 einen Längsschnitt durch einen vollgekapselten Dehnungsmeßstreifen.

Kern des in den beiden Figuren dargestellten Dehnungsmeßstreifens ist das mäanderförmige Meßgitter 1 mit den Anschlußstellen 1 a zum Anschluß der Kabellitzen 2. Das Meßgitter 1 kann in an sich bekannter Weise auf fotolithographischem Wege hergestellt sein, es kann auch ein Dünnfilm-Dehnungsmeßstreifen oder ein geätzter Folien-Dehnungsmeßstreifen (mit eigener Trägerschicht, die Polyaryletherketonschicht dient dann nur als Kapselung) verwandt werden. Das Meßgitter 1 kann also direkt oder indirekt auf der Polyaryletherketonschicht 4 befestigt werden. Das Meßgitter 1 wird dann mittels eines Epoxidharz-Klebers mit der Polyaryletherketon-Trägerschicht 4 verklebt.

Soll nun eine gekapselte Ausführung erzeugt werden, so wird zwischen die Trägerschicht 4 und die Anschlußkabel 2, welche vorzugsweise eine Teflonummantelung aufweisen, ein Transferklebefilm 3 mit einer Dicke von etwa 75 Mikrometern oder mehr gelegt. Dieser Transferklebefilm 3 besteht aus einem gegebenenfalls modifizierten Acrylharz. Von der anderen Seite werden die Anschlußkabel einschließlich der Anschlußstelle 1 a ebenfalls durch einen Transferklebefilm 3 abgedeckt. Danach wird widerum durch einen Epoxidharzkleber die Abdeckschicht 5, eine Polyaryletherketon-Folie, aufgeklebt. Diese Klebeverbindungen erhalten eine besonders hohe Festigkeit, wenn die Polyaryletherketon-Folie 4 bzw. 5 vor dem Beschichten mit dem Kleber mittels Corona-Entladung oder durch Behandlung im Niederdruckplasma aktiviert wird. Man erhält so einen robusten, fertig mit Anschlußkabeln versehenen Dehnungsmeßstreifen, der bei der Fertigung und beim Anwenden sehr leicht zu handhaben ist, und der trotz geringer Dicke voll gekapselt ist, daß er sogar unter Wasser eingesetzt werden kann.

Kann auf eine wasserdichte Kapselung des Meßgitters 1 verzichtet werden, so besteht der erfindungsgemäße Dehnungsmeßstreifen lediglich aus der Polyaryletherketon-Folie 4 und dem Meßgitter 1, welches durch den Epoxidharzkleber verklebt ist.

Die Kabellitze 2 kann in an sich bekannter Weise mit dem Meßgitter 1 bzw. der Anschlußstelle 1 a durch Bonden, Löten usw. verbunden werden, wobei die hohe thermische Belastbarkeit der Polyaryletherketon-Folie 4 beim Lötvorgang erhebliche Vorteile bietet.

Die Verklebung zwischen der Trägerschicht 4 und dem Meßgitter 1 bzw. der Trägerschicht 4, dem Meßgitter 1 und der Abdeckschicht 5 erfolgt durch einen Wärme-Druckprozeß (Kaschieren); auf gleicher Weise kann der Dehnungsmeßstreifen auch am (nicht dargestellten) Meßgrößenaufnehmer (beispielsweise einer Wägezelle) appliziert werden.

Es versteht sich von selbst, daß unter die Erfindung auch Träger- bzw. Abdeckfolien fallen, die aus einem modifizierten Werkstoff aus der Familie der teilkristallinen Thermoplaste Polyaryletherketon (PAEK) fallen. Dies sind insbesondere PEK, PEEK, PEKK, PEEKK, PEEKEK und PEKEKK.

## Patentansprüche

1. Dehnungsmeßstreifen mit einer Trägerschicht, auf welcher ein Meßgitter angeordnet ist, dadurch gekennzeichnet, daß die Trägerschicht (4) eine Polyaryletherketon-Folie ist.

2. Meßgrößenaufnehmer mit mindestens einem Dehnungsmeßstreifen, welcher eine Trägerschicht aufweist, auf welcher ein Meßgitter angeordnet ist, dadurch gekennzeichnet, daß die Trägerschicht (4) eine Polyaryletherketon-Folie ist.

3. Dehnungsmeßstreifen nach Anspruch 1 oder 2, dadurch gekennzeichnet, daß das Meßgitter durch eine aus Polyaryletherketon-Folie bestehende Abdeckschicht (5) abgedeckt ist.

4. Dehnungsmeßstreifen nach einem der vorhergehenden Ansprüche, dadurch gekennzeichnet, daß der Verbund zwischen Trägerschicht (4) und Meßgitter (1), Meßgrößenaufnehmer, Trägerschicht (4) und Meßgitter (1) bzw. zwischen Meßgitter (1), Trägerschicht (4) und Abdeckschicht (5) durch Verkleben hergestellt ist.

5. Dehnungsmeßstreifen nach Anspruch 4, dadurch gekennzeichnet, daß die Verklebung durch einen Epoxidharz-Klebstoff erfolgt.

6. Dehnungsmeßstreifen nach einem der Ansprüche 3 bis 5, dadurch gekennzeichnet, daß in einem Bereich, in welchem Anschlußkabel (2) des Meßgitters (1) herausgeführt sind, ein Transferklebefilm (3) aus einem Acrylharz zwischen der Träger- und der Abdeckschicht vorgesehen ist.

7. Verfahren zum Herstellen eines Dehnungsmeßstreifens nach einem der Ansprüche 4 bis 6, dadurch gekennzeichnet, daß die Trägerschicht (4) und/oder die Abdeckschicht (5) vor dem Verkleben mittels einer Corona-Behandlung aktiviert wird.

8. Verfahren zum Herstellen eines Dehnungsmeßstreifens nach einem der Ansprüche 4 bis 6 dadurch gekennzeichnet, daß die Trägerschicht (4) und/oder die Abdeckschicht (5) vor dem Verkleben mittels einer Behandlung in Niederdruckplasma aktiviert wird.

9. Verfahren zum Herstellen eines Dehnungsmeßstreifens nach einem der Ansprüche 4 bis 6, dadurch gekennzeichnet, daß die Träger- und/oder Abdeckschicht (4, 5) vor dem Verkleben mechanisch aufgerauht wird.

10. Verfahren zum Herstellen eines Dehnungsmeßstreifens nach einem der Ansprüche 4 bis 6, dadurch gekennzeichnet, daß das Meßgitter (1) vor dem Verkleben im Niederdruckplasma behandelt wird.

## Claims

1. Strain gauge with a support layer, on which a measuring grid is disposed, characterised in that the support layer (4) is a polyaryl ether ketone film.

2. Measuring transducer with at least one strain gauge comprising a support layer, on which a measuring grid is disposed, characterised in that the support layer (4) is a polyaryl ether ketone film.

3. Strain gauge according to claim 1 or 2, characterised in that the measuring grid is covered by a covering layer (5) consisting of polyaryl ether ketone film.

4. Strain gauge according to any one of the preceding claims, characterised in that the join between the support layer (4) and the measuring grid (1), the measuring transducer, the support layer (4) and the measuring grid (1) or between the measuring grid (1), the support layer (4) and the covering layer (5) is produced by bonding.

5. Strain gauge according to claim 4, characterised in that the bonding is effected by an epoxy resin adhesive.

6. Strain gauge according to any one of claims 3 to 5, characterised in that an adhesive transfer film (3) of an acrylic resin is provided between the support and the covering layer in a region in which connection cables (2) of the measuring grid (1) are led out.

7. Method for producing a strain gauge according to any one of claims 4 to 6, characterised in that the support layer (4) and/or the covering layer (5) is/are activated prior to bonding by means of a corona treatment.

8. Method for producing a strain gauge according to any one of claims 4 to 6, characterised in that the support layer (4) and/or the covering layer (5) is/are activated prior to bonding by means of a treatment in low-pressure plasma.

9. Method for producing a strain gauge according to any one of claims 4 to 6, characterised in that the support and/or covering layer (4, 5) is/are mechanically roughened prior to bonding.

10. Method for producing a strain gauge according to any one of claims 4 to 6, characterised in that the measuring grid (1) is treated in low-pressure plasma prior to bonding.

## Revendications

1. Jauge extensométrique comportant une couche support sur laquelle est disposée une grille de mesure, caractérisée en ce que la couche support est une feuille en polyaryléthercétone.

2. Capteur de grandeur de mesure comportant au moins une jauge extensométrique présentant une couche support sur laquelle est disposée une grille de mesure, caractérisée en ce que la couche support (4) est une feuille en polyaryléthercétone.

3. Jauge extensométrique selon la revendication 1 ou 2, caractérisée en ce que la grille de mesure est recouverte par une couche de couvertures (5) constituée d'une feuille de polyaryléthercétone.

4. Jauge extensométrique selon l'une des revendications précédentes, caractérisée en ce que le composite constitué entre la couche support (4) et la grille de mesure (1), le capteur de grandeur de mesure, la couche support (4) et la grille mesure (1) respectivement entre la grille de mesure (1), la couche support (4) et la couche de couverture (5) est fabriqué par collage.

5. Jauge extensométrique selon la revendication 4, caractérisée en ce que le collage s'effectue au moyen d'un adhésif du type résine époxy.

6. Jauge extensométrique selon l'une des revendications 3 à 5, caractérisée en ce que, dans une zone dans laquelle des câbles de raccordement (2) de la grille de mesure (1) sont sortis, est prévu un film adhésif de transfert (3) constitué d'une résine acrylique, placée entre la couche support et la couche de couverture.

7. Procédé de fabrication d'une jauge extensométrique selon l'une des revendications 4 à 6, caractérisé en ce que la couche support (4) et/ou la couche de couverture (5) sont activées par collage, au moyen d'un traitement Corona.

8. Procédé de fabrication d'une jauge extensométrique selon l'une des revendications 4 à 6, caractérisé en ce que la couche support (4) et/ou la couche de couverture (5) sont activés avant collage au moyen d'un traitement conduit dans un plasma à basse pression.

9. Procédé de fabrication d'une jauge extensométrique selon l'un des revendications 4 à 6, caractérisé en ce que la couche support et/ou la couche de recouvrement (4, 6) sont rendues rugueuses mécaniquement avant le collage.

10. Procédé de fabrication d'une jauge extensométrique selon l'une des revendications 4 à 6, caractérisé en ce que la grille de mesure (1) est traité avant collage, dans un plasma basse pression.
